(19) Europäisches Patentamt
European Patent Office
Office européen des brevets

(11) Veröffentlichungsnummer: **0 294 565 B1**

(12) **EUROPÄISCHE PATENTSCHRIFT**

(45) Veröffentlichungstag der Patentschrift: **23.10.91**

(51) Int. Cl.⁵: **B23Q 27/00**

(21) Anmeldenummer: **88106085.9**

(22) Anmeldetag: **16.04.88**

(54) Schlagmesser-Fräsverfahren.

(30) Priorität: **30.05.87 DE 3718261**

(43) Veröffentlichungstag der Anmeldung:
**14.12.88 Patentblatt 88/50**

(45) Bekanntmachung des Hinweises auf die
Patenterteilung:
**23.10.91 Patentblatt 91/43**

(84) Benannte Vertragsstaaten:
**CH DE ES FR GB IT LI SE**

(56) Entgegenhaltungen:
**EP-A- 0 097 346        WO-A-85/00545
DE-A- 3 410 575        DE-A- 3 424 494
DE-C- 58 174            FR-A- 862 890
GB-A- 2 065 012        SU-A- 738 771
SU-A- 944 790**

(73) Patentinhaber: **Wera-Werk Hermann Werner
GmbH & Co.
Korzerter Strasse 21
W-5600 Wuppertal 12(DE)**

(72) Erfinder: **Lieser, Karl
Dornröschenweg 12
W-5600 Wuppertal 1(DE)**

(74) Vertreter: **Rieder, Hans-Joachim, Dr. et al
Corneliusstrasse 45 Postfach 11 04 51
W-5600 Wuppertal 11(DE)**

EP 0 294 565 B1

Rank Xerox (UK) Business Services

## Beschreibung

Die Erfindung betrifft eine Schlagmesser-Fräsverfahren gemäß Oberbegriff des Anspruchs 1 bzw. 3.

Ein derartiges Schlagmesser-Fräsverfahren ist aus der US-A-4,141,278 bekannt, wobei die Werkstück-Drehachse und Werkzeug-Trägerachse achsparallel zueinander angeordnet sind. Um bspw. an einem zylindrischen Werkstück einen quadratischen Mehrkant fräsen zu können, muß der Werkzeugträger mit zwei sich diametral gegenüberliegenden, auswärts vorstehenden Schlagmessern bestückt sein. Jedes dieser Schlagmesser schneidet dann zwei parallel zueinander angeordnete Mehrkantflächen des Mehrkants. Damit diese Flächen nicht ballig, sondern eben sind, ist ein Drehzahlverhältnis zwischen Werkzeugträger und Werkstück von 2 : 1 erforderlich. Ein Sechskant verlangt demgemäß dreiin gleicher Umfangsverteilung am Werkzeugträger angeordnete Schlagmesser. Zufolge dieses Übersetzungsverhältnisses von 2 : 1 ist es nicht möglich, einen Mehrkant mit einer ungeraden Zahl von Ecken zu erstellen, es sei denn, daß das Drehzahlverhältnis geändert wird und man eine ballige Fläche in Kauf nimmt. Mittels eines einzigen Schlagmessers können sodann nur parallel zueinander liegende Flächen an einem zylindrischen Werkstück eingearbeitet werden. Damit die Schlagmesser-Fräsmaschine wirtschaftlich arbeitet, muß mit hohen Tourenzahlen gearbeitet werden. Dies ist jedoch begrenzt durch die Beschaffenheit des Schlagmessers selbst.

Ferner ist eine Schlagmesser-Fräsmaschine aus der DE-A-1 921 514 bekannt, wobei die Werkzeug-Trägerachse und die Werkstück-Drehachse rechtwinklig und windschief zueinander stehen. Es lassen sich auf diese Weise in gleicher Umfangsverteilung am Werkstück vorgesehene Nuten mit hoher Schnittgeschwindigkeit einarbeiten, ohne Kühlmittel zu verwenden, und zwar bedingt durch das Freischneiden der Werkzeugschneide. Die Nuten verlaufen dabei in Achsrichtung des Werkstükkes. Wendelförmige Nuten lassen sich mit dieser Schlagmesser-Fräsmaschine nicht erzeugen. Durch das Freischneiden sind die Nuten gegenüber dem Schlagmesser-Schneidprofil in ihrer Querschnittsform etwas vergrößert.

Aus der EP-A 0 97 346 sind ein Verfahren und eine Vorrichtung zur Herstellung von Werkstücken mit polygonaler Außenund/oder Innenkontur bekannt, bei dem das zu bearbeitende Werkstück um eine ortsfeste Achse mit konstanter Geschwindigkeit rotiert, während das Werkzeug auf einer in sich geschlossenen Bahnkurve geführt wird und während des gesamten Umlaufs am Werkstück angreift. Die Bahngeschwindigkeit des vorzugsweise translatorisch auf einer Kreiszylinderbahn geführten Werkzeugs während eines Umlaufs wird nach einem Bewegungsgesetz verändert. Bei rotierenden Werkzeugen wird vorgeschlagen, diese zusammen mit ihrem Drehantrieb auf einem bewegten Werkzeughalter anzuordnen und diesen translatorisch auf einer Kreisbahn, mit unterschiedlichen Bewegungsgeschwindigkeiten zu führen.

Aufgabe der Erfindung ist es, den Einsatzbereich eines Schlagmesser-Fräsverfahrens der angegebenen Art zu erhöhen.

Gelöst ist diese Aufgabe nach einem Ausführungsbeispiel der Erfindung in Verbindung mit dem Verfahren nach dem Oberbegriff durch das Kennzeichen des Patentanspruches 1.

Der Unteranspruch stellt eine vorteilhafte Weiterbildung dar.

Zufolge derartiger Ausgestaltung ist ein gattungsgemäßes Schlagmesser-Fräsverfahren von erhöhtem Gebrauchswert geschaffen. Der Einsatzbereich des Schlagmesser-Fräsverfahrens ist gegenüber den bekannten Bauformen erhöht. Es können neben der üblichen Herstellung von Zahnwellenprofilen, Kerbverzahnungen, Hirthverzahnungen, Keilwellenprofilen, Sonderprofilen und Mehrkanten weitere Fräsoperationen durchgeführt werden. Ferner ist es möglich, einen Mehrkant mit einer ungeraden Anzahl von Ecken mit planen Flächen zu erzeugen. Dies geschieht über die Steuerung der Drehgeschwindigkeit des Schlagmessers. Taucht letzteres z. B. zwecks Fertigung von Mehrkantflächen in das Werkstück ein, enspricht das Drehzahlverhältnis zwischen dem Werkzeugträger und Werkstück 2 : 1. Sobald das Schlagmesser austaucht, läuft es mit unterschiedlicher Drehgeschwindigkeit um, um dann beim nächsten Eintauchen in das Werkstück dieses mit der vorgegebenen Drehgeschwindigkeit zu durchlaufen. Auf diese Weise ist es möglich, mittels eines einzigen Schlagmessers bspw. einen Dreikant zu fertigen, was mit den Maschinen gemäß Stand der Technik nicht erreichbar ist. Es bietet sich weiterhin an, den Werkzeugträger mit mehreren Schlagmessern auszurüsten unter Erhöhung der Leistung der Fräsmaschine. Mit dieser lassen sich sogar wendelförmig verlaufende Nuten an dem Werkstück erzeugen, wobei die Werkstück-Drehachse und Werkzeug-Trägerachse in entsprechende Ausrichtung zueinander zu bringen sind. Durch angepaßte Drehgeschwindigkeit des Schlagmessers über den eingetauchten Weg in bezug auf das mit konstanter Drehgeschwindigkeit umlaufende Werkstück wird dann die wendelförmige Nut eingearbeitet. Eine erhebliche Steigerung der Wirtschaftlichkeit wird dadurch erzielt, daß das Schlagmesser während seiner Schneidphase mit der üblichen aus den Schneidbedingungen resultierenden Geschwindigkeit umläuft, um dann nach Austauchen zufolge Beschleunigung mit einer erhöhten Drehgeschwindigkeit seine Flugbahn zu durchwandern. Kurz vor dem erneuten Eintritt in das Werkstück erfolgt dann ein Abbremsen auf die vorgegebene Schnittgeschwindigkeit.

Die der Erfindung zugrundeliegende Aufgabe wird nach einem anderen Ausführungsbeispiel der Erfindung in Verbindung mit dem Verfahren nach dem Oberbegriff durch das kennzeichen des Patentanspruchs 3 gelöst, nämlich dadurch, daß die Drehgeschwindigkeit des Werkstückes im Augenblick der maximalen Eintrittstiefe des Schlagmessers kurzzeitig vermindert oder unterbrochen ist. Diese Maßnahme erlaubt es, trotz Änderung der das Nutenprofil bestimmenden Parameter der Werkzeugschneide genau angepaßte Nuten am Werkstück herzustellen. Solange das Schlagmesser noch nicht seine maximale Eintrittstiefe erreicht hat, findet das Freischneiden statt. Im Augenblick der maximalen Eintrittstiefe wird die Drehbewegung des Werkstückes jedoch kurzzeitig unterbrochen, während das Schlagmesser weiterläuft und dabei das seinem Schneidenprofil genau formangepaßte Nutenprofil erzeugt. Die/das kurzzeitige Verminderung/Unterbrechen der Drehbewegung des Werkstückes eventuell bis zur Stopposition beeinträchtigt dabei nicht das Drehzahlverhältnis zwischen Werkstück und Schlagmesser, sondern erhöht die Möglichkeiten zum Fräsen nahezu beliebiger Formen bis hin zu normalen Buchstaben. Wenn das Schlagmesser die größte Eintrittstiefe verläßt, vergrößert sich die Drehbewegung des Werkstückes wieder. Eine Verfälschung des Nutenprofiles trotz des weiteren Freischneidens tritt dann nicht ein. Die größte Eintrittstiefe des Schlagmessers liegt vor, wenn es sich in der $90°$-Eingriffsposition der Nut befindet. Diese Formgleichheit zwischen dem Nutenprofil und der Werkzeugschneide erhält man dabei, ohne die komplizierten, hinterschliffenen Schlagmesser einsetzen zu müssen, die sonst erforderlich wären. Das Nachschleifen der Schlagmesser ist sodann vereinfacht. Auch kann mit höheren Standzeiten der Werkzeugschneide gerechnet werden.

Nachstehend wird ein Ausführungsbeispiel der Erfindung anhand der Fig. 1 bis 3 erläutert. Es zeigt

Fig. 1    eine Ansicht einer erfindungsgemäß ausgestalteten Schlagmesser-Fräsmaschine,

Fig. 2    einen Querschnitt durch den Werkzeugträger und Werkstück während des Fräsens eines Dreikantes an einem zylindrischen Werkstück und

Fig. 3    die Draufsicht auf Fig. 2.

Die Schlagmesser-Fräsmaschine besitzt ein Fußgestell 1, in welchem ein nicht dargestellter Antrieb untergebracht ist. An dem Fußgestell 1 befindet sich ein Schaltpult 2 mit den entsprechenden Wählschaltern und Kontrollanzeigen.

Das Fußgestell 1 ist oberseitig mit einem in Maschinenlängsrichtung geführten Schlitten 3 ausgestattet. Auf diesem befindet sich eine Querführung 4 für einen Support 5, der Träger eines um eine horizontal liegende Drehachse x antreibbaren Spannfutters 6 ist. In diesem können Werkstücke 7 zentriert eingespannt werden.

In Gegenüberlage zum Support 5 erstreckt sich ein vom Fußgestell 1 ausgehender Kopf 8, in welchem der mit unterschiedlicher Drehgeschwindigkeit antreibbare Werkzeugträger 9 gelagert ist. Die Werkzeug-Trägerachse y verläuft achsparallel zur Werkstück-Drehachse x.

Diese Lage wird gewählt, wenn mittels eines an dem umlaufenden Werkzeugträger 9 radial auswärts vorstehenden Schlagmessers 10 ein Mehrkant 11 am zylindrischen Werkstück 7 erzeugt werden soll. Die Achsen x, y liegen auf einer gemeinsamen horizontalen Ebene.

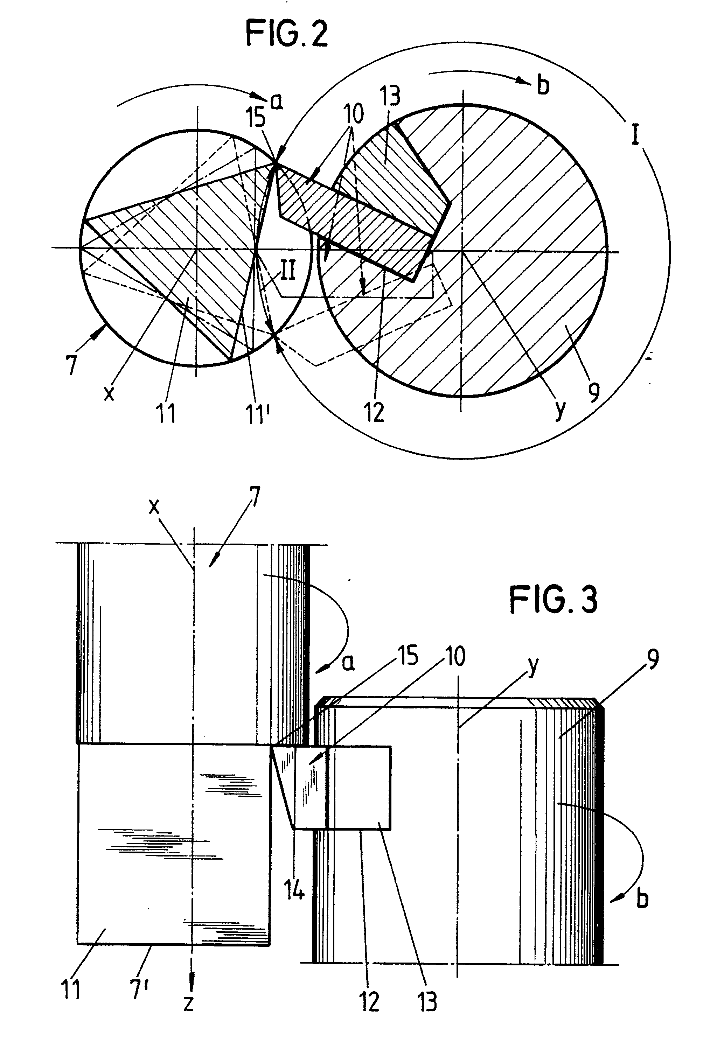

Das Schlagmesser 10 ist in einen Einsteckschacht 12 des Werkzeugträgers 9 eingesetzt und wird von einer Klemmbacke 13 schwingungsfrei verspannt. Mit seinem über den Werkzeugträger 9 vorstehenden Überstand bildet das Schlagmesser 10 die Schneidflanke 14, welche gemäß Fig. 3 radial zur Trägerachse y ausgerichtet ist.

Die Fig. 2 und 3 veranschaulichen, daß die Drehrichtung a des Werkstückes 7 der Drehrichtung b des Werkzeugträgers 9 entgegengesetzt gerichtet ist.

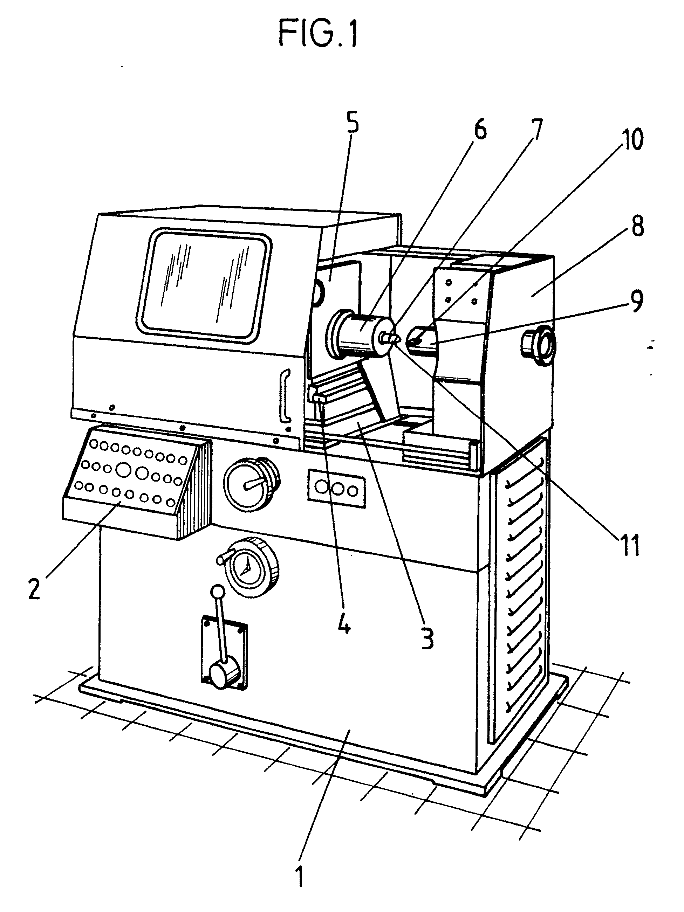

Um einen dreieckigen Mehrkant 11 an dem zylindrischen Werkstück 7 erzeugen zu können, ist der Schlitten 3 in die Stellung gemäß Fig. 1 zu verlagern derart, daß sich der Werkzeugträger 9 vor dem freien Stirnende 7' des Werkstückes 7 befindet. Danach ist der Support 5 auf der Querführung 4 zu verschieben, um die Werkstück-Drehachse x in entsprechenden Abstand zur Schneidspitze 15 zu bringen. Anschließend werden Spannfutter 6 und Werkzeugträger 9 in Umdrehung versetzt bei gleichzeitigem Längszug des Schlittens 3 in Pfeilrichtung z, wobei die Schneidflanke 14 in Richtung auf die Stirnfläche 7' des Werkstückes 7 zufährt. Das Werkstück 7 läuft mit konstanter Geschwindigkeit um, während dabei sich die Drehgeschwindigkeit des Schlagmessers 10 ändert. Hierbei wird der Mehrkant 11 am Werkstück 7 erzeugt.

Im einzelnen sieht dies so aus, daß die Drehgeschwindigkeit des Schlagmessers 10 über den ausgetauchten Weg I größer ist zu derjenigen über den eingetauchten Weg II. Während des eingetauchten Weges II entspricht die Drehgeschwindigkeit einem Drehzahlverhältnis von 2 : 1 zwischen Werkzeugträger 9 und Werkstück 7, wobei absolut plane Flächen 11' erzeugt werden. Gemäß Fig. 2 ist mit gestrichelten Linien das eintauchende Schlagmesser veranschaulicht. In der strichpunktiert dargestellten Stellung des Schlagmesers nimmt dieses seine größte Eintrittstiefe ein und gelangt dann bei weiterer Drehung in die in vollen Linien gezeichnete Austrittsstellung des Schlagmessers 10. Nach dem Austauchen erfolgt schlagartig die Erhöhung der Drehgeschwindigkeit. Diese wird kurz vor dem erneuten Eintauchen des Schlagmessers in das Werkstück auf die vorgegebene Schnittgeschwindigkeit abgebremst. Bei dem erneuten Eintritt des Schlagmessers 10 wird dann die benachbarte Dreikantfläche gefertigt bzw. der entsprechende Span zur Erzeugung derselben abgehoben.

Weitere Variationen bezüglich der zu erzeugenden Profile sind dadurch möglich, daß die Ausrichtung von Werkzeugwelle zur Werkstückspindel anders als 90° gewählt bzw. einstellbar ausgelegt wird.

An einer Maschine können auch mehrere winklig zueinander stehende Werkzeugspindeln vorgesehen sein, etwa entsprechend DE-A-32 40 165.

## Patentansprüche

1. Schlagmesser-Fräsverfahren zum gleichzeitigen Einfräsen mehrerer in Form von Nuten, Flächen oder dergleichen ausgebildeter Profilstrukturen in umlaufende Werkstücke (7) mittels eines an einem umlaufenden werkzeugträger radial auswärts vorstehenden Schlagmessers (10), welches den Querschnitt des Werkstückes mit einer den Bedingungen des Schlagfräsens entsprechenden Geschwindigkeit durchtaucht, wobei die Umlaufdrehzahlen von Werkzeugträger und Werkstück in einem von der angestrebten Profilstruktur bestimmten Verhältnis stehen, **dadurch gekennzeichnet, daß** die Drehgeschwindigkeit des Schlagmessers (10) über den ausgetauchten Weg (I) unterschiedlich ist zu derjenigen über den eingetauchten Weg (II).

2. Schlagmesser-Fräsverfahren nach Anspruch 1, **dadurch gekennzeichnet, daß** die Drehgeschwindigkeit des Schlagmessers (10) über den ausgetauchten Weg (I) größer ist als diejenige über den eingetauchten Weg (II).

3. Schlagmesser-Fräsverfahren zum gleichzeitigen Einfräsen mehrerer in Form von Nuten, Flächen oder dergleichen ausgebildeter Profilstrukturen in umlaufende Werkstücke (7) mittels eines an einem umlaufenden Werkzeugträger radial auswärts vorstehenden Schlagmesser (10), welches den Querschnitt des Werkstückes mit einer den Bedingungen des Schlagfräsens entsprechenden Geschwindigkeit durchtaucht, wobei die Umlaufdrehzahlen von Werkzeugträger und Werkstück in einem von der angestrebten Profilstruktur bestimmten Verhältnis stehen, **dadurch gekennzeichnet, daß** die Drehgeschwindigkeit des Werkstücks im Augenblick der maximalen Eintrittstiefe des Schlagmessers kurzzeitig vermindert oder unterbrochen ist.

## Claims

1. Fly-cutter milling process for simultaneously cutting several profile structures in the form of grooves, faces or the like in rotating workpieces (7) by means of a fly cutter (10) which projects radially outwards on a rotating tool support and which plunges through the crosssection of the workpiece at a speed corresponding to the conditions of fly cutting, wherein the speeds of rotation of tool support and workpiece are in a ratio determined by the desired profile structure, characterised in that the speed of rotation of the fly cutter (10) over the path (I) after emergence from the workpiece is different to that over the path (II) while submerged in the workpiece.

2. Fly-cutter milling process according to claim 1, characterised in that the speed of rotation of the fly cutter (10) over the path (I) after emergence from the workpiece is greater than that over the path (II) while submerged in the workpiece.

3. Fly-cutter milling process for simultaneously cutting several profile structures in the form of grooves, faces or the like in rotating workpieces (7) by means of a fly cutter (10) which projects radially outwards on a rotating tool support and which plunges through the crosssection of the workpiece at a speed corresponding to the conditions of fly cutting, wherein the speeds of rotation of tool support and workpiece are in a ratio determined by the desired profile structure, characterised in that the speed of rotation of the workpiece is reduced or interrupted for a short time at the moment of the maximum depth of entry of the fly cutter.

## Revendications

1. Procédé de fraisage par fraise à outil saillant destiné au fraisage simultané de plusieurs structures de profils sous forme de gorges, de surfaces ou similaires dans des pièces à usiner (7) en rotation, au moyen d'une fraise à outil saillant (10) qui fait saillie radialement vers l'extérieur sur un porte-outil en rotation, l'outil pénétrant dans la section transversale de la pièce à usiner à une vitesse qui correspond aux conditions de fraisage par fraise à outil saillant, la vitesse du porte-outil et celle de la pièce à usiner ayant entre elles un rapport déterminé par la structure de profil visée, caractérisé en ce que la vitesse de rotation de la fraise à outil saillant (10) sur le trajet (I) où elle n'est pas engagée est différente de celle de la fraise à outil saillant sur le trajet (II) où elle est engagée.

2. Procédé de fraisage par fraise à outil saillant selon la revendication 1, caractérisé en ce que la vitesse de rotation de la fraise à outil saillant (10) est plus grande sur le trajet (I) où elle n'est pas engagée que sur le trajet (II) où elle est engagée.

3. Procédé de fraisage par fraise à outil saillant destiné au fraisage simultané de plusieurs structures de profil sous forme de gorges, de surfaces ou similaires, dans des pièces à usiner en rotation (7), au moyen d'un outil saillant (10) qui fait saillie radialement vers l'extérieur sur un porte-outil en rotation, et qui pénètre dans la section transversale de la pièce à usiner à une vitesse qui correspond aux conditions de fraisage par fraise à outil saillant, la vitesse de rotation du porte-outil et celle de la pièce à usiner ayant entre elles un rapport déterminé par la structure de profil visée, caractérisé en ce que la vitesse de rotation de la pièce à usiner est temporairement réduite, ou la rotation est temporairement interrompue, au moment où l'outil saillant atteint la profondeur maximum de pénétration.

# FIG.1

# FIG.2

# FIG.3